# EUROPÄISCHE PATENTANMELDUNG

(11) **EP 1 380 854 A2**
(43) Veröffentlichungstag der Anmeldung: **14.01.2004**
(21) Anmeldenummer: 03005771.5
(22) Anmeldetag: 14.03.2003
(51) Int. Cl.: G01S 13/42, G01S 13/48

(54) **Verfahren und Radarsystem zur Bestimmung der Richtungswinkel von Radarobjekten**

(30) Priorität: 12.07.2002 DE 10231597
(71) Anmelder: ROBERT BOSCH GMBH, 70442 Stuttgart (DE)
(72) Erfinder: Eder, Sonja, 73257 Koengen (DE); Budiscak, Benoit, 74343 Sachsenheim (DE)

(57) **Zusammenfassung**

Verfahren zur Bestimmung der Richtungswinkel (α) von Radarobjekten (12) mit einem Mehrstrahlradar (10), mit den Schritten:
(a) Aufnahme von Frequenzspektren (Sr, Sm. Sl) der Radarechos (NFr, NFm, NFl) für mehrere Strahlen (20),
(b) Aufsuchen einer Meßfrequenz (fₘₐₓ) in der Nähe eines dem Radarobjekt (12) zugeordneten Frequenzmaximums und
(c) Vergleich der Phasen und/oder Amplituden der Radarechos (NFr, NFm, NFl) bei der Meßfrequenz mit für unterschiedliche Richtungswinkel bekannten Referenzmustern,
dadurch gekennzeichnet, daß die Schritte (b) und (c) mehrfach, jeweils für verschiedene Meßfrequenzen (fₘₐₓ, fₘₐₓ₊₁, fₘₐₓ₊₂, fₘₐₓ₋₁, fₘₐₓ₋₂) ausgeführt werden und daß die für die verschiedenen Meßfrequenzen erhaltenen Richtungswinkel auf Konsistenz geprüft werden.

## Beschreibung

Die Erfindung betrifft ein Verfahren zur Bestimmung der Richtungwinkel von Radarobjekten mit einem Mehrstrahlradar, mit den Schritten:
(a) Aufnahme von Frequenzspektren der Radarechos für mehrere Strahlen,
(b) Aufsuchen einer Meßfrequenz in der Nähe eines dem Radarobjekt zugeordneten Frequenzmaximums und
(c) Vergleich der Phasen und/oder Amplituden der Radarechos bei der Meßfrequenz mit für unterschiedliche Richtungswinkel bekannten Referenzmustern.

### STAND DER TECHNIK

Aus DE 195 43 813 A1 ist ein Verfahren der eingangs genannten Art bekannt, das dazu dient, in einem Kraftfahrzeug mit Hilfe eines statischen Mehrstrahlradars die Positionen von Radarobjekten, beispielsweise von vorausfahrenden Fahrzeugen zu bestimmen, so daß dann im Rahmen einer adaptiven Geschwindigkeitsregelung (ACC; Adaptive Cruise Control) die Geschwindigkeit des eigenen Fahrzeugs an die Geschwindigkeit eines vorausfahrenden Fahrzeugs angepaßt und der Abstand zu dem vorausfahrenden Fahrzeug auf einen geeigneten Wert geregelt werden kann. Die Positionen der Radarobjekte werden in Polarkoordinaten angegeben, also durch Abstände und Richtungswinkel. Die Abstände können anhand der Signallaufzeiten der Radarechos ermittelt werden. Mit Hilfe des Dopplereffektes können zudem die Relativgeschwindigkeiten der Radarobjekte bestimmt werden. Für eine fehlerfreie Abstandsregelung werden jedoch auch die Richtungswinkel der Radarobjekte benötigt, damit sich entscheiden läßt, ob es sich bei einem georteten Radarobjekt um ein vorausfahrendes Fahrzeug auf der eigenen Spur oder um ein für die Abstandsregelung irrelevantes Fahrzeug auf einer Nebenspur handelt.

Bei einem statischen Mehrstrahlradar liegt die optische Achse des Radarsystems in Bezug auf das Fahrzeug fest. Sie ist vorzugsweise parallel zur Längsachse des Fahrzeugs. Diese optische Achse bildet dann zweckmäßigerweise die Bezugsachse für die Bestimmung der Richtungswinkel. Das Mehrstrahlradarsystem weist mehrere Empfangselemente auf, die ihr Empfindlichkeitsmaximum jeweils bei einer anderen Empfangsrichtung haben und die somit zusammen einen gewissen Winkelbereich abdecken. Da die Empfindlichkeitsbereiche der Empfangselemente einander überlappen, erhält man von einem einzelnen Radarobjekt Radarechos in mehreren Kanälen, d.h., in mehreren Empfangselementen. Für ein idealisiertes, annähernd punktförmiges Radarobjekt bei einem gegebenen Richtungswinkel besteht zwischen den in den verschiedenen Kanälen empfangenen Signalen eine charakteristische Phasen- und Amplitudenbeziehung. Durch die Laufzeitunterschiede der Radarechos vom Radarobjekt zu den verschiedenen Empfangselementen ergibt sich eine Phasendifferenz, die proportional zum Richtungswinkel und zum Abstand der Empfangselemente in der Richtung rechtwinklig zur optischen Achse und umgekehrt proportional zur Wellenlänge der Radarwellen ist. Die Amplitudenverhältnisse zwischen den empfangenen Signalen sind vom Richtungswinkel und von den Empfindlichkeitskurven der Empfangselemente abhängig und lassen sich für die interessierenden Richtungswinkel vorab experimentell bestimmen und in einem Referenzantennendiagramm festhalten. So ist es möglich, durch Auswertung der Phasenbeziehungen oder durch Auswertung der Amplitudenbeziehungen oder auch durch eine Kombination beider Auswertungsverfahren (Auswertung der komplexen Amplituden) den Richtungswinkel eines georteten Radarobjektes zu bestimmen.

Die in den verschiedenen Kanälen empfangenen Hochfrequenzsignale werden durch Mischen mit einer Referenzfrequenz, unter Erhaltung der Phasen- und Amplitudenbeziehungen, in Niederfrequenzsignale umgewandelt, die sich in einer Auswertungselektronik auswerten lassen. Beispielsweise können die Niederfrequenzsignale mit Analog/Digital-Umsetzern digitalisiert und dann digital weiterverarbeitet werden. Zunächst wird für jeden Strahl des Mehrstrahlradars, d.h., für jedes der von den verschiedenen Empfangselementen erhaltenen Niederfrequenzsignale, ein Frequenzspektrum aufgenommen. Jedes Radarobjekt zeichnet sich im Spektrum in der Form eines Peaks ab, dessen Lage von der Dopplerverschiebung und damit von der Relativgeschwindigkeit des Objekts abhängig ist. Wenn die Sendefrequenz des Radarsystems moduliert wird, wie beispielsweise bei einem FMCW-Radar (Frequency Modulated Continuous Wave), ist die Lage der Peaks auch von der Laufzeit abhängig. Wenn das gesendete Signal abwechselnd mit steigender und fallender Rampe moduliert wird, läßt sich aus dem Frequenzabstand der bei den verschiedenen Rampen erhaltenen Peaks die Relativgeschwindigkeit des Objekts und aus dem Mittelwert der Peak-Frequenzen der Abstand des Objekts berechnen. Mehrdeutigkeiten der empfangenen Signale bei gleichzeitiger Ortung mehrerer Objekte lassen sich dadurch beseitigen, daß bei der Frequenzmodulation die Rampensteigungen variiert werden. Zusammengehörige Peak-Paare lassen sich dann daran erkennen, daß die bei unterschiedlichen Rampensteigungen erhaltenen Relativgeschwindigkeiten und Objektabstände übereinstimmen.

Da die von demselben Objekt in den mehreren Empfangselementen des Mehrstrahlradars empfangenen Signale identische Dopplerverschiebungen und auch zumindest annähernd identische Signallaufzeiten aufweisen, liegen die Peaks in sämtlichen Kanälen etwa bei derselben Frequenz.

Bei dem bekannten Verfahren wird als Meßfrequenz für die Winkelbestimmung diejenige Frequenz ausgewählt, die dem Scheitel des Peaks entspricht.

Reale Radarobjekte, insbesondere ausgedehnte Objekte wie beispielsweise LKWs, weisen jedoch zumeist mehrere Reflexionszentren auf, deren Radarechos sich in den verschiedenen Empfangselementen überlagern und miteinander interferieren. Hierdurch kann die Genauigkeit und Zuverlässigkeit der Winkelbestimmung beeinträchtigt werden.

### AUFGABE, LÖSUNG UND VORTEILE DER ERFINDUNG

Aufgabe der Erfindung ist es, ein Verfahren zur Bestimmung der Richtungswinkel anzugeben, das gegenüber den bei realen Radarobjekten auftretenden Störeffekten robuster ist.

Diese Aufgabe wird bei einem Verfahren der eingangs genannten Art dadurch gelöst, daß die Schritte (b) und (c) mehrfach, jeweils für verschiedene Meßfrequenzen ausgeführt werden und daß die für die verschiedenen Meßfrequenzen erhaltenen Richtungswinkel auf Konsistenz geprüft werden.

Diese Lösung beruht auf der Beobachtung, daß die bei ausgedehnten Radarobjekten auftretenden Interferenz- und Störeffekte kritisch von der Frequenz abhängig sind und sich deshalb bei verschiedenen Meßfrequenzen unterschiedlich auswirken. Häufig werden diese Störeffekte schon durch eine geringfügige Veränderung der Meßfrequenz eliminiert, so daß man durch Auswertung mehrerer Meßfrequenzen ein verläßlicheres oder genaueres Ergebnis erhält, da sich "Ausreißer", die durch Interferenz bei einer ungünstig gewählten Meßfrequenz verursacht wurden, erkennen und eliminieren oder sich zumindest durch Mittelung der Ergebnisse in ihren Auswirkungen mildern lassen.

Wenn die für verschiedene Meßfrequenzen erhaltenen Ergebnisse derart inkosistent sind, daß sich kein eindeutiger Richtungswinkel bestimmen läßt, erhält man zumindest die Information, daß eine verläßliche Bestimmung des Richtungswinkels zur Zeit nicht möglich ist, so daß die Gefahr von Fehlbestimmungen des Richtungswinkels vermindert wird.

Ein Radarsystem zur Durchführung des Verfahrens ist Gegenstand des unabhängigen Erzeugnisanspruchs.

Vorteilhafte Ausgestaltungen der Erfindung ergeben sich aus den Unteransprüchen.

In Schritt (c) können für die Bestimmung des Richtungswinkels bei der jeweiligen Meßfrequenz die komplexen Amplituden ausgewertet werden, die auch Phaseninformation enthalten, oder wahlweise nur die Absolutbeträge der Amplituden.

Wenn, wie bei einem FMCW-Radar, die Frequenz des gesendeten Signals mit unterschiedlichen Rampen moduliert wird, erhält man für jede Rampe ein gesondertes Frequenzspektrum, und das oben beschriebene Verfahren kann dann für jeden Peak in jedem dieser Spektren ausgeführt werden. Für ein einzelnes Objekt sollten dann die anhand der verschiedenen Spektren ermittelten Richtungswinkel übereinstimmen. Wenn mehrere Objekte gleichzeitig geortet werden, gilt dies natürlich nur unter der Voraussetzung, daß die mehreren Peaks in den verschiedenen Spektren jeweils dem richtigen Objekt zugeordnet wurden. Eine Diskrepanz in den Richtungswinkeln kann daher auch dazu genutzt werden, die Zuordnung zwischen Peaks und Objekten zu überprüfen und ggf. zu korrigieren.

Auch bei richtiger Objektzuordnung können sich aber aufgrund der Störeffekte auch mehr oder weniger große Abweichungen in den Richtungswinkeln ergeben, die für dieselbe Meßfrequenz aus den verschiedenen Spektren erhalten werden. Bei der Konsistenzprüfung werden daher nicht nur die für die verschiedenen Meßfrequenzen erhaltenen Ergebnisse miteinander verglichen, sondern auch die aus verschiedenen Spektren, d.h., von verschiedenen Rampen der Frequenzmodulation erhaltenen Ergebnisse. Wenn bei einer gegebenen Meßfrequenz die aus den verschiedenen Spektren erhaltenen Ergebnisse voneinander abweichen, deutet dies darauf hin, daß das Ergebnis für diese spezielle Meßfrequenz durch Störeinflüsse verfälscht ist. Bei der Bestimmung des plausibelsten Richtungswinkels wird man dann das für diese Meßfrequenz erhaltene Ergebnis geringer gewichten oder ganz aus der Auswertung ausschließen. Umgekehrt wird man die Plausibilität eines erhaltenen Richtungswinkels um so höher einstufen, je häufiger dieser Richtungswinkel durch die Auswertung anderer Spektren bestätigt wird. Insgesamt kann so eine beträchtliche Steigerung der Genauigkeit und Zuverlässigkeit erreicht werden.

Je größer die Anzahl der Strahlen des Mehrstrahlradars ist, desto größer wird im allgemeinen die Winkelauflösung und die Meßgenauigkeit sein. Allerdings wird mit zunehmender Anzahl der Strahlen auch die Auswertung anhand der Referenzmuster komplexer.

Wenn die Frequenzspektren in der Form diskreter Spektren vorliegen, erhält man Amplitudenwerte für diskrete Frequenzen, die vorzugsweise mit gleichen Abständen über den betrachteten Frequenzbereich verteilt sind. Als Meßfrequenz werden dann vorzugsweise die Frequenz, die dem Maximum des Peaks entspricht, sowie eine oder mehrere Nachbarfrequenzen in dem diskreten Spektrum ausgewählt, bei Auswertung von drei Meßfrequenzen also beispielsweise die Maximumfrequenz und die nächstniedrigere sowie die nächsthöhere Frequenz. Entsprechend werden bei Auswertung von fünf Meßfrequenzen vorzugsweise die Maximumfrequenz und die beiden unmittelbar benachbarten niedrigeren Frequenzen sowie die beiden unmittelbar benachbarten höheren Frequenzen ausgewertet.

### KURZBESCHREIBUNG DER ZEICHNUNGEN

Im folgenden wird ein Ausführungsbeispiel der Erfindung anhand der Zeichnung näher erläutert.

Es zeigen:
- Fig. 1: ein Blockdiagramm eines Radarsystems, das zur Durchführung des erfindungsgemäßen Verfahrens ausgebildet ist;
- Fig. 2: ein Beispiel eines Frequenzspektrums mit einem durch ein einzelnes Radarobjekt verursachten Peak;
- Fig, 3: den Peaks des Spektrums nach Figur 2 mit höherer Frequenzauflösung;
- Fig. 4: ein Beispiel eines Referenzantennendiagramms, das die Beziehung zwischen den Amplituden in Abhängigkeit vom Richtungswinkel angibt; und
- Fig. 5 (A) - (E): Diagramme, die für fünf unterschiedliche Meßfrequenzen und jeweils für vier Frequenzrampen die Abweichung zwischen den gemessenen Amplituden und dem Referenzmuster in Abhängigkeit vom Richtungswinkel angeben.

### BESCHREIBUNG VON AUSFÜHRUNGSBEISPIELEN

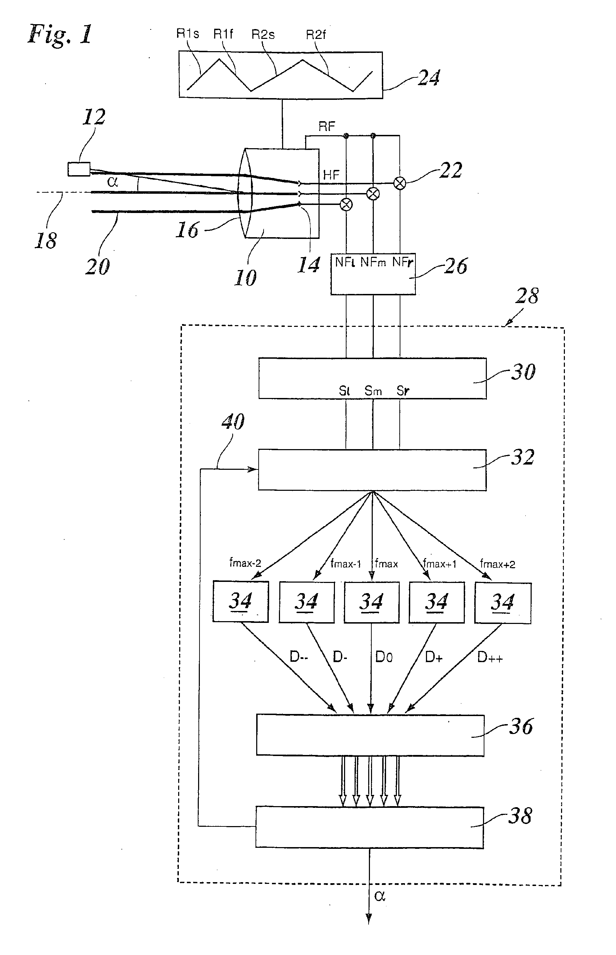

Figur 1 zeigt schematisch einen Radarsensor eines Mehrstrahlradars 10, das an der Frontpartie eines Kraftfahrzeugs installiert ist und dazu dient, vor dem Fahrzeug befindliche Radarobjekte 12 zu orten. Das Mehrstrahlradar 10 weist drei Sende- und Empfangselemente 14 auf, im folgenden kurz als Empfangselemente bezeichnet, von denen eines auf der durch eine Optik 16 des Radarsensors definierten optischen Achse 18 liegt, während die beiden anderen seitlich versetzt zur optischen Achse angeordnet sind. Auf diese Weise werden drei Meßstrahlen 20 erzeugt, die unter unterschiedlichen Winkeln in Bezug auf die optische Achse abgestrahlt werden. Die in der Zeichnung nur als Linien dargestellten Meßstrahlen 20 haben in der Praxis die Form von Radarkeulen, die sich über größere, einander überlappende Winkelbereiche erstrecken. Die Linien in F Figur 1 geben jeweils die Richtung des Intensitätsmaximums dieser Radarkeulen an.

Das Radarobjekt 12 wird im allgemeinen von allen drei Radarkeulen getroffen und erzeugt für jeden Meßstrahl ein Radarecho, das durch die Optik 16 wieder auf das Empfangselement 14 fokussiert wird, das den betreffenden Meßstrahl ausgesandt hat. Die Linien, die die Meßstrahlen 20 repräsentieren, geben zugleich die Richtung der Empfindlichkeitsmaxima der Empfangselemente 14 an. Jedes der drei Empfangselemente 14 empfängt somit ein mehr oder minder starkes Radarecho von dem Radarobjekte 12. Das Verhältnis zwischen den Phasen der empfangenen Signale und ebenso das Verhältnis zwischen deren Amplituden ist von dem Richtungswinkel α abhängig, unter dem das Radarobjekt 12 vom Mehrstrahlradar 10 "gesehen" wird.

Die von den Empfangselementen 14 empfangenen Hochfrequenzsignale HF werden jeweils in einem gesonderten Mischer 22 mit einem Referenzsignal RF gemischt, dessen Frequenz in der gleichen Größenordnung wie das empfangene Signal liegt. Bei dem Referenzsignal RF kann es sich beispielsweise um das Signal handeln, das den Sende- und Empfangselementen 14 zugeführt wird, um die Meßstrahlen 20 zu erzeugen. Die Frequenz des Referenzsignals RF ist dann mit der Frequenz der gesendeten Radarwellen identisch. Am Ausgang jedes Mischers 22 erhält man so ein Niederfrequenzsignal NFr, NFm bzw. NFl, dessen Frequenz der Differenz zwischen den Frequenzen des gesendeten und des empfangenen Signals entspricht.

Zu dem Mehrstrahlradar 10 gehört eine Steuereinrichtung 24, die die Frequenz des gesendeten Signals (und damit auch die Referenzfrequenz RF) bestimmt. Im gezeigten Beispiel handelt es sich bei dem Mehrstrahlradar 10 um ein FMCW-Radar. Die gesendete Frequenz wird mit vier unterschiedlichen Rampen moduliert, nämlich zwei steigenden Rampen R1s und R2s und zwei fallenden Rampen R1f und R2f. Die Steigungen der Rampen R1s und R1f sind entgegengesetzt gleich, ebenso die Steigungen der Rampen R2s und R2f.

Die Frequenzen der Niederfrequenzsignale am Ausgang der Mischer 22 sind einerseits, aufgrund der Frequenzmodulation, von der Laufzeit der Radarwellen zum Radarobjekt und zurück zu den Empfangselementen 14 abhängig und andererseits aufgrund des Dopplereffektes von der Relativgeschwindigkeit des Radarobjektes 12. Wenn man aus den Frequenzen der Niederfrequenzsignale, die während der Rampen R1s und R1f empfangen werden, den Mittelwert bildet, so heben sich die durch Laufzeitunterschiede bedingten Frequenzverschiebungen auf, und man erhält ein Maß für die Relativgeschwindigkeit. Bildet man umgekehrt die Differenz dieser Frequenzen, so heben sich die durch den Dopplereffekt verursachten Frequenzverschiebungen auf, und man erhält ein Maß für die Laufzeit und damit für den Abstand des Radarobjektes 12. Die Rampen R2s und R2f dienen zur Beseitigung von Mehrdeutigkeiten bei gleichzeitiger Ortung mehrerer Radarobjekte.

Die Niederfrequenzsignale NFr, NFm und NF1 werden in einem Analog/Digital-Umsetzer 26 digitalisiert und dann auf drei parallelen Kanälen, die den drei Meßstrahlen 20 entsprechen, einem digitalen Auswerterechner 28 zugeführt.

In einem ersten Funktionsblock 30 des Auswerterechners wird aus dem Niederfrequenzsignal für jeden Kanal ein diskretes Frequenzspektrum Sr, Sm bzw. Sl berechnet. Die Meßzeit für die Aufnahme des Frequenzspektrums entspricht jeweils der Dauer der Rampe R1s, R1f, R2s oder R2f, mit der die gesendete Frequenz gerade moduliert wird. Die laufzeit- und geschwindigkeitsabhängigen Frequenzverschiebungen sind deshalb während der Aufnahme des Spektrums im wesentlichen konstant. Für jedes Radarobjekt 12 erhält man daher in jedem Frequenzspektrum theoretisch genau einen Peak. Wenn die Signale auf den drei Kanälen von demselben Radarobjekt 12 stammen, sind die Laufzeiten und auch die Dopplerverschiebungen in allen drei Kanälen im wesentlichen gleich, so daß die Peaks in den drei Spektren annähernd bei derselben Frequenz liegen. Ihre Amplituden sind jedoch unterschiedlich, weil die drei Empfangselemente 14 unterschiedlich starke Radarechos vom Radarobjekt 12 empfangen. Da bei dem in Figur 1 gezeigten Beispiel das Radarobjekt 12 rechts von der optischen Achse 18 liegt, wird die Amplitude des Niederfrequenzsignals NFr am größten und die Amplitude des Signals NF1 am kleinsten sein. Entsprechendes gilt für die Höhe der Peaks in den Spektren.

In einem weiteren Funktionsblock 32 wird dann eine Meßfrequenz fₘₐₓ aufgesucht, bei der die drei Peaks in den Spektren Sr, Sm und Sl ihr Maximum annehmen. Diese Frequenz sollte für alle drei Spektren die gleiche sein. Falls doch geringfügige Abweichungen bestehen, wird die am besten passende Frequenz als Meßfrequenz ausgewählt. Wenn mehrere Radarobjekte 12 gleichzeitig geortet werden, enthalten die Spektren mehrere Peaks, und für jeden Peak wird die zugehörige Meßfrequenz fₘₐₓ bestimmt.

Die Amplituden der drei Niederfrequenzsignale bei der Meßfrequenz fₘₐₓ werden dann in einem Funktionsblock 34 ausgewertet, um mögliche Kandidaten für den Richtungswinkel α zu bestimmen. Zu diesem Zweck wird durch sogenanntes Amplitudenmatching das Muster der auf den drei Kanälen bei der Meßfrequenz fₘₐₓ empfangenen Amplituden Winkel für Winkel mit einem gespeicherten Referenzmuster verglichen, wie weiter unten noch näher erläutert werden wird. Das Ergebnis ist eine Abweichungsfunktion D₀, die für jeden Winkel das Ausmaß der Abweichung zwischen den gemessenen Amplitudenmuster und dem Referenzmuster angibt. Der oder die Winkel, bei denen die Abweichungsfunktion D₀ minimal wird, sind daher geeignete Kandidaten für den Richtungswinkel α.

Diese Prozedur wird im gezeigten Beispiel nicht nur für die Meßfrequenz fₘₐₓ durchgeführt, sondern auch für vier weitere Meßfrequenzen fₘₐₓ₋₁ fₘₐₓ₋₂ fₘₐₓ₊₁ und fₘₐₓ₊₂, die dem Scheitel des Peaks in den diskreten Frequenzspektren unmittelbar benachbart sind. Der Funktionsblock 34 ist deshalb in Figur 1 fünffach dargestellt. Die insgesamt fünf Abweichungsfunktionen D₀, D₋, D--, D₊ und D₊₊, die man auf diese Weise erhält, werden in einem Puffer 36 zwischengespeichert.

So erhält man für jedes Radarobjekt 12 mindestens fünf Kandidaten für den Richtungswinkel α. Im Idealfall sollte sich bei allen fünf Meßfrequenzen derselbe Kandidat, nämlich der richtige Richtungswinkel ergeben. Wenn jedoch die Amplitude bei einer oder mehreren der Meßfrequenzen durch Interferenzen oder sonstige Störeinflüsse verfälscht worden ist, können sich unterschiedliche Werte für den Richtungswinkel α ergeben. In diesem Fall kann durch Mittelung der Ergebnisse oder durch Eliminieren von Ausreißern die Genauigkeit und die Verläßlichkeit bei der Bestimmung des Richtungswinkels verbessert werden.

Die oben beschriebene Prozedur wird während jeder Rampe R1s, R1f, R2s und R2f wiederholt, so daß man für einen vollständigen, aus allen vier Rampen bestehenden Meßzyklus schließlich vier Sätze von Abweichungsfunktionen D₋₋, D₋, D₀, D₊ und D₊₊ im Puffer 36 erhält. Diese vier mal fünf Abweichungsfunktionen werden in einem Auswahlblock 38 miteinander verglichen, um den plausibelsten und somit wahrscheinlichsten Wert für den Richtungswinkel α auszuwählen und als Ergebnis auszugeben.

Da die Lage der Peaks in den Frequenzspektren von der Rampensteigung abhängig ist, erhält man im Funktionsblock 32 während jeder Rampe unterschiedliche Werte für die Meßfrequenzen fₘₐₓ, fₘₐₓ₊₁ etc.. Wenn mehrere Radarobjekte 12 gleichzeitig geortet werden, müssen die entsprechenden Peaks, die man zu verschiedenen Rampen erhält, in der bei einem FMCW-Radar üblichen Weise richtig zugeordnet werden. Im Auswahlblock 38 werden dann jeweils nur die Abweichungsfunktionen miteinander verglichen, die zu demselben Objekt gehören. Da verschiedene Objekte in der Regel unter verschiedenen Richtungswinkeln gesehen werden, können andererseits auch die Zwischenergebnisse, die man in dem Auswahlblock 38 als Kandidaten für den Richtungswinkel erhält, dazu benutzt werden, die Objektzuordnung im Funktionsblock 32 zu überprüfen und ggf. zu korrigieren. Dies wird in Figur 1 durch einen Rückkopplungspfeil 40 angedeutet.

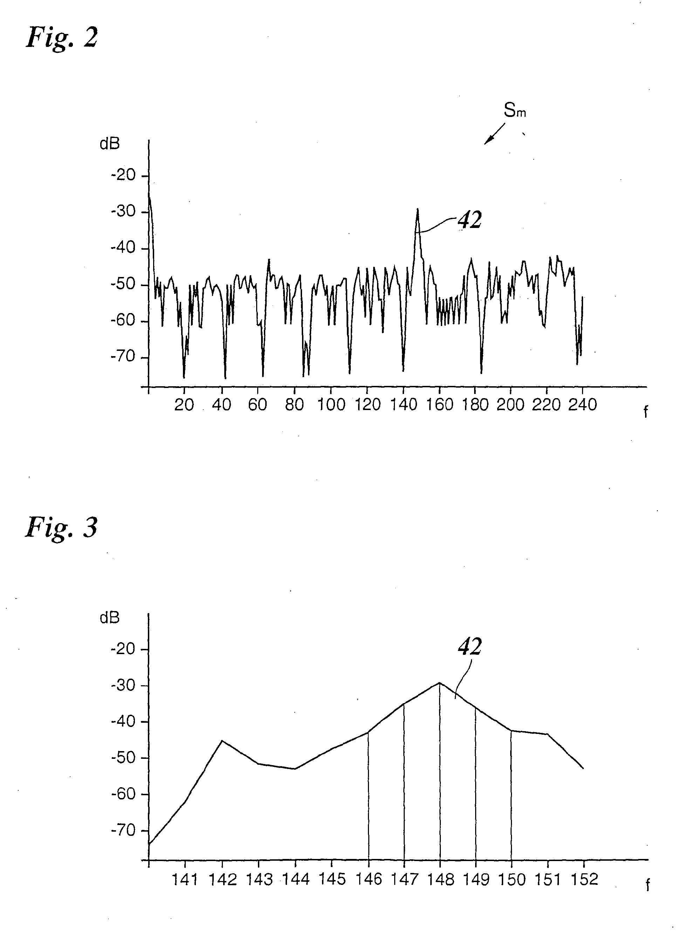

Die Arbeitsweise des oben beschriebenen Radarsystems soll nun unter Bezugnahme auf Figuren 2 bis 5 anhand eines Beispiels erläutert werden.

Figur 1 zeigt ein Beispiel für eines der in dem Funktionslbock 30 berechneten Frequenzspektren, beispielsweise Sₘ. Die diskreten Frequenzen im Spektrum sind mit einem fortlaufenden Index f numeriert, der in Figur 2 auf der waagerechten Achse angegeben ist. Das Radarobjekt 12 zeichnet sich im Spektrum in der Form eines einzelnen Peaks 42 ab, dessen Scheitel beim Frequenzindex f = 148 liegt.

In Figur 3 ist der Peak 42 mit höherer Frequenzauflösung gezeigt. In dem Funktionsblock 32 in Figur 2 werden für diesen Peak 42 die folgenden Meßfrequenzen ausgewählt (ausgedrückt in Frequenzindizes): fₘₐₓ = 148, fₘₐₓ₋₁ = 147, fₘₐₓ₋₂ = 146, fₘₐₓ₊₁= 149 und fₘₐₓ₊₂ = 150.

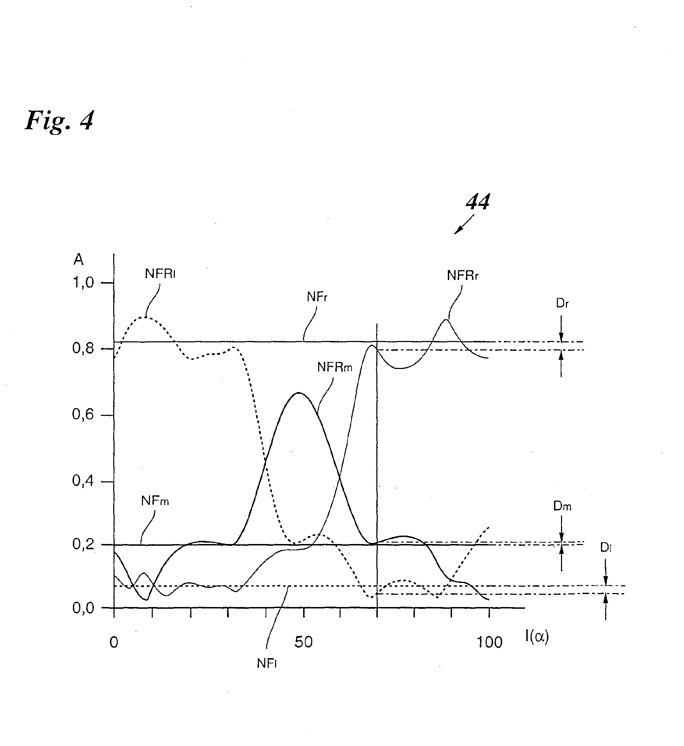

Figur 4 zeigt ein sogenanntes Referenzantennendiagramm 44, das im Auswerterechner 28 gespeichert ist und für die Auswertung in den Funktionsblöcken 34 in Figur 1 herangezogen wird. Dieses Referenzantennendiagramm 44 spezifiziert für jeden Richtungswinkel innerhalb des in Frage kommenden Winkelbereiches ein Referenzmuster, das angibt, welche Beziehung theoretisch, bei einem idealen Radarobjekt, zwischen den Amplituden der drei Niederfrequenzsignale NFr, NFm und NFl bestehen müßte. Die Richtungswinkel sind in Figur 4 auf der waagerechten Achse in der Form eines Winkelindex I(α) angegeben, der im gezeigten Beispiel von 0 bis 100 läuft. Die Zuordnung zu den Richtungswinkeln α ist von der Größe des Winkelerfassungsbereichs des Radarsystems abhängig. Im gezeigten Beispiel entspricht der Index 50 dem Richtungswinkel α = 0. Bei einem Winkelerfassungsbereich von ± 10° würde dann der Index 100 einem Richtungswinkel α = +10° entsprechen (Abweichung nach rechts), und der Index 0 einem Richtungswinkel α = -10°.

Da die Amplituden der empfangenen Radarechos von Objekt zu Objekt verschieden sind, müssen die gemessenen Amplituden sowie die Amplituden im Referenzantennendiagramm normiert werden, damit sie miteinander verglichen werden können. Im gezeigten Beispiel sind die Amplituden A im Referenzantennendiagramm nach der Summennorm normiert worden, so daß die Summe aller drei Amplituden stets den Wert 1 ergibt. Die theoretische Amplitude NFRm für das Niederfrequenzsignal NFm im mittleren Kanal wird in Figur 4 durch eine fette, durchgezogene Kurve repräsentiert. Sie ist annähernd symmetrisch zum Index 50 (α = 0) und hat auch bei diesem Index ihr Maximum. Die theoretische Amplitude NFR1 für das Niederfrequenzsignal NF1 wird in Figur 4 durch eine gestrichelt eingezeichnete Kurve repräsentiert, die ihr Maximum bei kleineren Indexwerten hat, während die theoretische Amplitude NFRr für das Niederfrequenzsignal NFr durch eine dünner eingezeichnete durchgehende Kurve repräsentiert wird, die ihr Maximum bei Indexwerten von mehr als 50 hat.

Die drei in entsprechender Liniendarstellung eingezeichneten waagerechten Geraden in Figur 4 geben die zugehörigen gemessenen Amplituden der Niederfrequenzsignale NFm, NFr und NFl an. Die Aufgabe des Algorithmus, der in dem Funktionsblock 34 in Figur 1 ausgeführt wird, besteht nun im Prinzip darin, den Winkelindex zu suchen, bei dem die gemessenen Amplituden möglichst gut zu den theoretischen Amplituden passen. Im gezeigten Beispiel ist dies für den Winkelindex I(α) = 70 der Fall. Für jeden Kanal sind in Figur 4 die zugehörigen Abweichungen Dm, Dl und Dr zwischen den theoretischen und den gemessenen Amplituden angegeben. Diese Abweichungen lassen sich auf analoge Weise für jeden Winkelindex bestimmen. Aus den Abweichungen Dm, Dr und Dl in den einzelnen Kanälen wird dann die Abweichungsfunktion D₀ bzw. D₊, D₊₊, D₋ oder D-- berechnet, die die Gesamt-Abweichung angibt, beispielsweise in der Form der Quadratsumme der Abweichungen Dm, Dr und Dl.

Streng genommen ist die genaue Form des Referenzantennendiagramms 44 auch von der Frequenz der gesendeten und empfangenen Radarwellen abhängig. Da sich jedoch die Frequenz der empfangenen Radarwellen nur wenig von der gesendeten Frequenz unterscheidet, genügt es im allgemeinen, ein einziges Referenzantennendiagramm 44 zu speichern, das für sämtliche Frequenzen gilt und demgemäß für die Auswertung in allen fünf Funktionsblöcken 34 in Figur 1 benutzt werden kann.

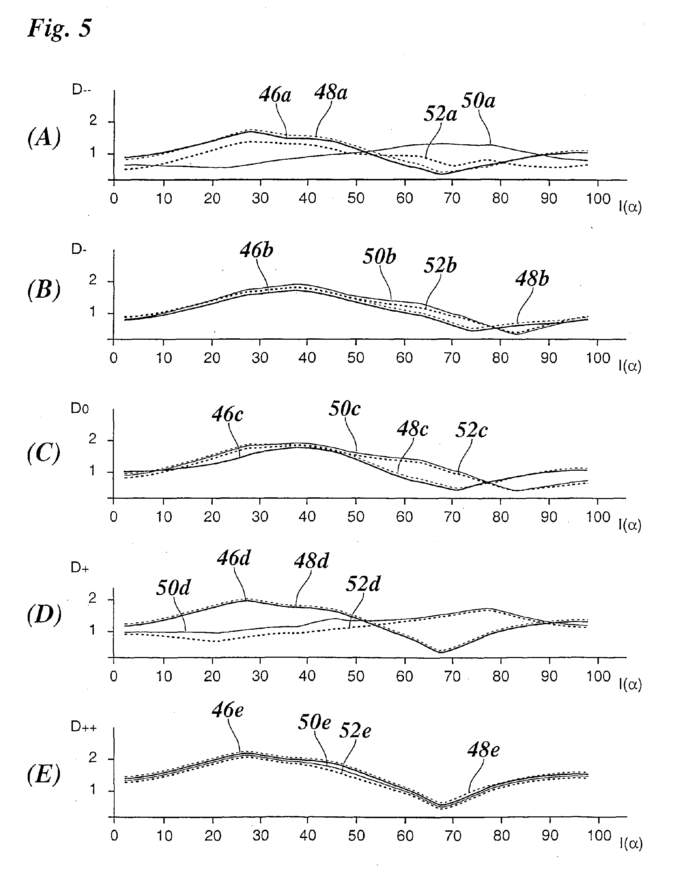

Figuren 5(A) bis (E) zeigen die insgesamt zwanzig Abweichungsfunktionen D₋₋, D₋, D₀, D₊ und D₊₊, die man auf diese Weise während eines kompletten, aus vier Rampen bestehenden Meßzyklus erhält und die im Puffer 36 gespeichert und dann im Auswahlblock 38 miteinander verglichen werden. Die Kurven 46a und 48a in Figur 5(A) geben die Abweichungsfunktionen D₋₋ an, die man bei der Meßfrequenz fₘₐₓ₋₂ während der Rampen R1s und R1f erhalten hat. Die Kurven 50a und 52a geben die Abweichungsfunktionen für die Rampen R2s und R2f und für dieselbe Meßfrequenz an. Die entsprechenden Kurven in Figuren 5(B) - (E) sind mit den gleichen Bezugszahlen und jeweils einem anderen Buchstabenzusatz (b - e) gekennzeichnet.

Würde man die Auswertung nur bei der einzigen Meßfrequenz fmax vornehmen, so hätte man nur das Ergebnis gemäß Figur 5(C) zur Verfügung. Hier haben die Kurven 46c und 48c ihr Minimum bei einem Winkelindex von etwa 72, während die Kurven 50c und 52c ihr Minimum bei einem Winkelindex von etwa 83 haben. Es ließe sich daher nicht eindeutig entscheiden, welcher Richtungswinkel α nun der richtige ist.

Zieht man jedoch die Ergebnisse hinzu, die bei den Meßfrequenzen fₘₐₓ₋₁ und f_{max+ 1} erhalten wurden, so spricht eine hohe Wahrscheinlichkeit dafür, daß ein Winkelindex von etwa 70 der richtige ist. Zwar erhält man bei fₘₐₓ₋₁ (Figur 5(B)) ähnlich widersprüchliche Ergebnisse wie in Figur 5(C), doch bestätigen die Kurven 46d und 48d in Figur 5(D) lediglich einen Winkelindex in der Nähe von 70, während das Minimum der beiden anderen Kurven 50d und 52d hier bei einem völlig anderen Wert (nämlich bei 20) liegt. Der endgültige Winkelindex könnte daher im Auswahlblock 38 etwa dadurch bestimmt werden, daß die Kurven 50b-50d und 52b-50d, die inkonsistente Ergebnisse liefern, eliminiert werden, und daß man aus den Minima der verbliebenen Kurven (in der Nähe von 70) den Mittelwert bildet.

Zieht man weiterhin die Ergebnisse hinzu, die bei den übernächsten Nachbarfrequenzen fmax-2 und fₘₐₓ₊₂ erhalten wurden (Figuren 5(A) und 5(E)) so erkennt man, daß zwar Figur 5(A) kein konsistentes Ergebnis liefert und daher unbrauchbar ist, Figur 5(E) hingegen für alle vier Rampen nahezu denselben Kurvenverlauf zeigt, mit einem Minimum bei einem Winkelindex von etwa 68. Dies läßt den Schluß zu, daß in diesem Fall die Amplituden bei der Frequenz fₘₐₓ₊₂ am wenigsten durch Interferenzen oder Störeinflüsse verfälscht sind und deshalb das verläßlichste Ergebnis liefern. In diesem Fall würde daher der Algorithmus im Auswahlblock 38 den Winkelindex α ausgeben, der zum Winkelindex 68 gehört.

Für den Auswahlalgorithmus sind unterschiedliche Implementierungen möglich. Im einfachsten Fall wird einfach aus den Minima aller insgesamt zwanzig Kurven der Mittelwert gebildet. Eine Verfeinerung kann darin bestehen, daß offensichtliche "Ausreißer" vor der Mittelung eliminiert werden.

Gemäß einer anderen Ausführungsform kann der Algorithmus so gestaltet sein, daß zunächst für jede einzelne Meßfrequenz ein oder mehrere Kandidaten für den Winkelindex sowie zugehörige Gewichte bestimmt werden. Das Gewicht eines Winkelindex ist dabei um so größer, je kleiner die Abweichungsfunktion ist und je besser die verschiedenen Kurven bei diesem Winkelindex übereinstimmen. Beispielsweise würden in Figur 5(C) die Winkelindizes 72 und 83 ein mittleres Gewicht erhalten, da hier jeweils zwei der insgesamt vier Kurven übereinstimmend ihr Minimum haben. In Figur 5(E) würde dagegen der Winkelindex 68 ein mehr als doppelt so hohes Gewicht erhalten, weil hier derselbe Wert durch alle vier Kurven bestätigt wird. Im letzten Auswahlschritt würde dann der Winkelindex ausgewählt, bei dem die gewichtete Summe aus den für die einzelnen Meßfrequenzen bestimmten Winkelindizes ihr Maximum hat.

Umgekehrt ist es auch möglich, zunächst ein oder mehrere Kandidaten für den Winkelindex und zugehörige Gewichte anhand der Kurven 46a-46e zu bestimmen, dann entsprechend für die Kurven 48a-48e usw., und dann schließlich den Winkelindex auszuwählen, für die die gewichtete Summe der so erhaltenen Winkelindizes ein Maximum hat.

Statt in den Funktionsblöcken 34 die Auswahlfunktionen zu berechnen, ist es auch möglich, in diesen Funktionsblöcken direkt einzelne Kandidaten für die Winkelindizes sowie zugehörige Gewichte oder Plausibilitäten zu berechnen und dann im Auswahlblock 38 eine Auswahl unter diesen Kandidaten zu treffen.

## Patentansprüche

1. Verfahren zur Bestimmung der Richtungswinkel (α) von Radarobjekten (12) mit einem Mehrstrahlradar (10), mit den Schritten:
(a) Aufnahme von Frequenzspektren (Sr, Sm. Sl) der Radarechos (NFr, NFm, NF1) für mehrere Strahlen (20),
(b) Aufsuchen einer Meßfrequenz (fₘₐₓ) in der Nähe eines dem Radarobjekt (12) zugeordneten Frequenzmaximums (42) und
(c) Vergleich der Phasen und/oder Amplituden der Radarechos (NFr, NFm, NFl) bei der Meßfrequenz mit für unterschiedliche Richtungswinkel bekannten Referenzmustern,
**dadurch gekennzeichnet, daß** die Schritte (b) und (c) mehrfach, jeweils für verschiedene Meßfrequenzen (fₘₐₓ, fₘₐₓ₊₁, fₘₐₓ₊₂, fₘₐₓ₋₁, fₘₐₓ₋₂) ausgeführt werden und daß die für die verschiedenen Meßfrequenzen erhaltenen Richtungswinkel auf Konsistenz geprüft werden.

2. Verfahren nach Anspruch 1, **dadurch gekennzeichnet, daß** in Schritt (c) die Amplituden der Radarechos mit den durch ein Referenzantennendiagramm (44) gegebenen Referenzmustern verglichen werden.

3. Verfahren nach Anspruch 1 oder 2, **dadurch gekennzeichnet, daß** die Sendefrequenz des Mehrstrahlradars mit unterschiedlichen Rampen (R1s, R1f, R2s, R2f) moduliert wird, daß die Schritte (a), (b) und (c) für jede Rampe gesondert ausgeführt werden und daß bei der Konsistenzprüfung auch die für verschiedene Rampen bei derselben oder verschiedenen Meßfrequenzen erhaltenen Richtungswinkel auf Konsistenz geprüft werden.

4. Verfahren nach einem der vorstehenden Ansprüche, **dadurch gekennzeichnet, daß** in Schritt (c) Plausibilitätsgrößen (D₋₋, D₋, D₀, D₊, D₊₊) für mehrere mögliche Richtungswinkel berechnet werden, wobei die Plausibilitätsgröße für einen gegebenen Richtungswinkel um so größer ist, je besser dieser Richtungswinkel mit dem Referenzmuster übereinstimmt, und daß als endgültiger Richtungswinkel (α) derjenige Richtungswinkel ausgewählt wird, der unter Berücksichtigung der für die verschiedenen Meßfrequenzen erhaltenen Plausibilitätsgrößen die größte Plausibilität hat.

5. Radarsystem mit einem Mehrstrahlradar (10) und einer Auswerteeinrichtung (28) zur Bestimmung der Richtungswinkel (α) von Radarobjekten (12), welche Auswerteeinrichtung eine Einrichtung (30) zur Aufnahme von Frequenzspektren der Radarechos aufweist, **dadurch gekennzeichnet, daß** die Auswerteeinrichtung (28) eine Einrichtung (32) zum Aufsuchen mehrerer Meßfrequenzen in der Nähe eines dem Radarobjekt (12) zugeordneten Frequenzmaximums (42) in den Frequenzspektren, eine Einrichtung (34) zum Vergleich der Phasen und/ oder Amplituden der Radarechos bei jeder der Meßfrequenzen mit für unterschiedliche Richtungswinkel gespeicherten oder berechneten Referenzmustern und eine Einrichtung (38) zur Berechnung des endgültigen Richtungswinkels (α) aus den für unterschiedliche Meßfrequenzen erhaltenen Vergleichsergebnissen aufweist.
